# EUROPÄISCHE PATENTSCHRIFT

(11) **EP 3 928 604 B1**
(45) Veröffentlichungstag und Bekanntmachung des Hinweises auf die Patenterteilung: **14.02.2024**
(21) Anmeldenummer: 21178126.5
(22) Anmeldetag: 08.06.2021
(51) Int. Cl.: A01B 69/00, A01B 69/04, G01S 13/89, G01S 13/931

(54) **LANDWIRTSCHAFTLICHER TRAKTOR MIT EINEM SYSTEM ZUR ERKENNUNG NACHFOLGENDER VERKEHRSTEILNEHMER**
AGRICULTURAL TRACTOR WITH A SYSTEM FOR DETECTING SUBSEQUENT TRAFFIC PARTICIPANTS
TRACTEUR AGRICOLE DOTÉ D'UN SYSTÈME DE DÉTECTION D'UN USAGER DE LA ROUTE LE SUIVANT

(30) Priorität: 23.06.2020 DE 102020207777
(43) Veröffentlichungstag der Anmeldung: 29.12.2021
(73) Patentinhaber: Deere & Company, Moline, IL 61265 (US)
(72) Erfinder: BROCKE, Stefan, 68163 Mannheim (DE); FRITZ, Norbert, 68163 Mannheim (DE)
(74) Vertreter: Dehnhardt, Florian Christopher

(56) Entgegenhaltungen:
- EP-A1- 3 125 061
- EP-A1- 3 352 037
- EP-A1- 3 572 897
- EP-A1- 3 815 975
- WO-A1-2020/044802
- JP-A- 2019 175 254
- US-A1- 2020 039 483

## Beschreibung

Die Erfindung betrifft einen landwirtschaftlichen Traktor mit einem Anbaugerät und einem System zur Erkennung nachfolgender Verkehrsteilnehmer.

Ein landwirtschaftlicher Traktor ist ein Fahrzeug, das hohe Zugleistungen mit vergleichsweise geringen Fahrtgeschwindigkeiten verbindet, um daran angehängte Anbaugeräte zu ziehen und/oder über eine Zapfwelle mit Antriebsleistung zu versorgen. Derartige Anbaugeräte existieren in einer Vielzahl von Ausführungen für die verschiedensten Aufgaben der Feldbearbeitung wie auch der Durchführung von Bauarbeiten.

Daneben führen landwirtschaftliche Traktoren auch Transportfahrten auf öffentlichen Straßen aus, beispielweise zwischen Hof und zu bearbeitendem Feld.

Zugleich führt die Zunahme der Leistungsfähigkeit moderner landwirtschaftlicher Traktoren zu immer größer werdenden Anbaugeräten. Befinden sich diese im Heckbereich des landwirtschaftlichen Traktors, beispielsweise an einem Dreipunkt-Kraftheber oder einer anderen Anhängekupplung, so führt dies zu unerwünschten Totbereichen, die vom Fahrer nicht oder nur erschwert durch Drehen des Kopfs oder über den Rückspiegel einsehbar sind. Insbesondere auf der gleichen Fahrspur folgende Straßenfahrzeuge können daher vom Fahrer nicht ohne weiteres wahrgenommen werden. Dies gilt vor allem bei im Heckbereich angebrachten großvolumigen Ladewagen oder Bearbeitungsgeräten wie Feldspritzen oder Sämaschinen, die ein ausladendes Klappgestänge aufweisen.

Um den sich daraus ergebenden Sichtbeeinträchtigungen Rechnung zu tragen, ist beispielsweise in der JP 2019-175254 A ein mit einem System zur Hinderniserkennung ausgestatteter Traktor mit einem gezogenen Anbaugerät offenbart. Das System umfasst neben einer Vielzahl von Lidar-Sensoren zur Identifizierung von in einen jeweiligen Erfassungsbereich eintretenden Hindernissen weiterhin eine Informationseinheit zur Ausgabe entsprechender visueller und/oder akustischer Fahrerwarnungen. Die Lidar-Sensoren sind an einem vorderen bzw. hinteren Dachabschnitt einer Fahrerkabine des Traktors angebracht, sodass ein nach vorne bzw. nach hinten in Richtung des Erdbodens orientierter Erfassungsbereich gebildet ist.

Ferner sind Systeme zur Verwendung in landwirtschaftlichen Traktoren bekannt, die eine im Heckbereich des Anbaugeräts angebrachte Kamera umfassen, mittels derer der Totbereich erfasst sowie über einen Bildschirm in einer Fahrerkabine des landwirtschaftlichen Traktors wiedergegeben wird. Derartige Systeme machen es jedoch erforderlich, dass jedes Anbaugerät mit einer eigenen Kamera ausgestattet werden muss, wobei diese zudem über eine ebenfalls vorzusehende Schnittstelle mit dem traktorseitigen Systemteil zu verbinden ist.

Insofern besteht ein Bedarf an einem bezüglich seines Gebrauchsnutzens verbesserten bzw. vereinfachten System zur Totbereichserkennung.

Erfindungsgemäß umfasst der landwirtschaftliche Traktor ein Anbaugerät sowie ein System (Assistenzsystem) mit einem Sensor und einer Kontrolleinheit, wobei der Sensor einen bodennah verlaufenden Erfassungsbereich in Richtung des an dem landwirtschaftlichen Traktor angebrachten Anbaugeräts aufweist sowie ausgebildet ist, ein im Erfassungsbereich liegendes bzw. in diesen eintretendes Fahrzeug zu erkennen sowie ein entsprechendes Hinweissignal zu erzeugen, das der Kontrolleinheit zugeführt wird, wobei die Kontrolleinheit dazu ausgebildet ist, nach Maßgabe des Hinweissignals eine Bedienerschnittstelle zur Ausgabe eines Fahrerhinweises anzusteuern. Hierbei ist mittels des Sensors ein zwischen einer Straßenoberfläche und einer dieser zugewandten unteren Kontur des Anbaugeräts gebildeter freier Bereich vom landwirtschaftlichen Traktor aus einsehbar.

Ein dem aus landwirtschaftlichen Traktor und Anbaugerät gebildeten Fahrzeuggespann folgendes Fahrzeug lässt sich auf diese Weise zum Zwecke der Ausgabe eines geeigneten Fahrerhinweises verlässlich erkennen.

Die Erfindung macht sich den Umstand zunutze, dass bei einem an dem landwirtschaftlichen Traktor angebrachten Anbaugerät zwischen der Straßenoberfläche und einer dieser zugewandten unteren Kontur des Anbaugeräts ein freier Bereich gebildet ist, der mittels des Sensors vom landwirtschaftlichen Traktor aus einsehbar ist. Die Höhe des freien Bereichs hängt im Falle eines gezogenen Anhängers in erster Linie von dessen Reifendurchmesser bzw. im Falle eines an einem Dreipunkt-Kraftheber angebrachten Bearbeitungsgeräts von dessen Position in angehobener Transportposition ab. Bei dem Sensor handelt es sich beispielsweise um einen Radarsensor oder einen bildgebenden Sensor in Gestalt einer Kamera oder dergleichen, dessen Erfassungsbereich (bezüglich der Vorwärtsfahrtrichtung) rückwärts in Richtung des Anbaugeräts orientiert ist. Der Sensor kann dabei an einer Unterseite einer tragenden Struktur des landwirtschaftlichen Traktors angebracht sein. Insbesondere wird eine Positionierung unterhalb der Hinterachse des landwirtschaftlichen Traktors bevorzugt. Die Verwendung eines Radarsensors ermöglicht es, dass selbst im Falle einer Anbringung oberhalb des freien Bereichs (wenn also das Anbaugerät einer direkten Abstrahlung des Sensors im Wege steht) durch Nutzung von Reflexionen, die zwischen den durch eine Anbaugerätestruktur und der Straßenoberfläche gebildeten Grenzflächen auftreten, ein nachfolgendes Fahrzeug erfassbar ist. In einem solchen Fall ist der freie Bereich für den Sensor zumindest mittelbar einsehbar.

Ein besonderer Vorteil des erfindungsgemäßen Systems ist es, dass sämtliche Komponenten dem landwirtschaftlichen Traktor zugeordnet sind. Dieses lässt sich daher mit beliebigen Anbaugeräten verwenden, ohne dass die Notwendigkeit einer Nachrüstung besteht.

Zusätzlich ist es denkbar, dass die Kontrolleinheit bei der Ausgabe des Fahrerhinweises (also der Ansteuerung der Bedienerschnittstelle) die aktuelle Fahrdynamik des landwirtschaftlichen Traktors, insbesondere dessen Fahrtgeschwindigkeit und Fahrtrichtung (Lenkwinkel), wie auch die Fahrdynamik des nachfolgenden Fahrzeugs, insbesondere dessen Relativposition gegenüber dem landwirtschaftlichen Traktor einschließlich Anbaugerät sowie dessen Fahrtgeschwindigkeit, berücksichtigt.

Da der Sensor im Falle einer Anbringung in Bodennähe dem Risiko erhöhter Verschmutzung ausgesetzt ist, kann zusätzlich eine Reinigungseinrichtung vorhanden sein. Diese umfasst einen Wischer oder eine Hochdruckdüse zur Ausbringung eines Luft- oder Flüssigkeitsstrahls auf eine aktive Fläche des Sensors. Bei dem Flüssigkeitsstrahl handelt es sich im einfachsten Fall um Wasser, das gegebenenfalls mit einer Waschlösung versetzt ist. Der Reinigungsvorgang wird von der Kontrolleinheit durch Betätigung der Reinigungseinrichtung selbsttätig initiiert, sobald eine Verschlechterung der Sensordatenqualität festzustellen ist.

Zusätzlich kann ein mechanischer Schutz in Gestalt eines den Sensor umgebenden Schilds vorhanden sein. Dieser verhindert eine mögliche Beschädigung des Sensors beim Überfahren von Hindernissen oder aufgrund von während der Feldbearbeitung aufgeschleuderter Erde.

Der Anbringungspunkt des Sensors kann zudem variabel ausgebildet sein, sodass sich verschiedenen Anhängekupplungen und damit Anbausituationen Rechnung tragen lässt.

Die Bedienerschnittstelle ist bevorzugt zur Ausgabe optischer und/oder akustischer Informationen ausgebildet. Insbesondere kann diese eine berührungsempfindliche Bedienoberfläche aufweisen, sodass diese zugleich eine Eingabeeinheit bildet, über die sich eine Konfiguration des Systems seitens des Fahrers hinsichtlich Art und Weise der auszugebenden Fahrerhinweise wie auch eine Aktivierung bzw. Deaktivierung des Systems vornehmen lässt.

Der prinzipielle Aufbau des erfindungsgemäßen Systems ist den Zeichnungen entnehmbar. Es zeigen:
- Fig. 1: ein Ausführungsbeispiel eines mit dem erfindungsgemäßen System ausgestatteten landwirtschaftlichen Traktors mit einem daran angebrachten Transportanhänger,
- Fig. 2: der in Fig. 1 wiedergegebene landwirtschaftliche Traktor für den Fall eines an einem Dreipunkt-Kraftheber angebrachten Bearbeitungsgeräts in Gestalt einer Sämaschine, und
- Fig. 3: ein schematisch dargestelltes Ausführungsbeispiel des erfindungsgemäßen Systems.

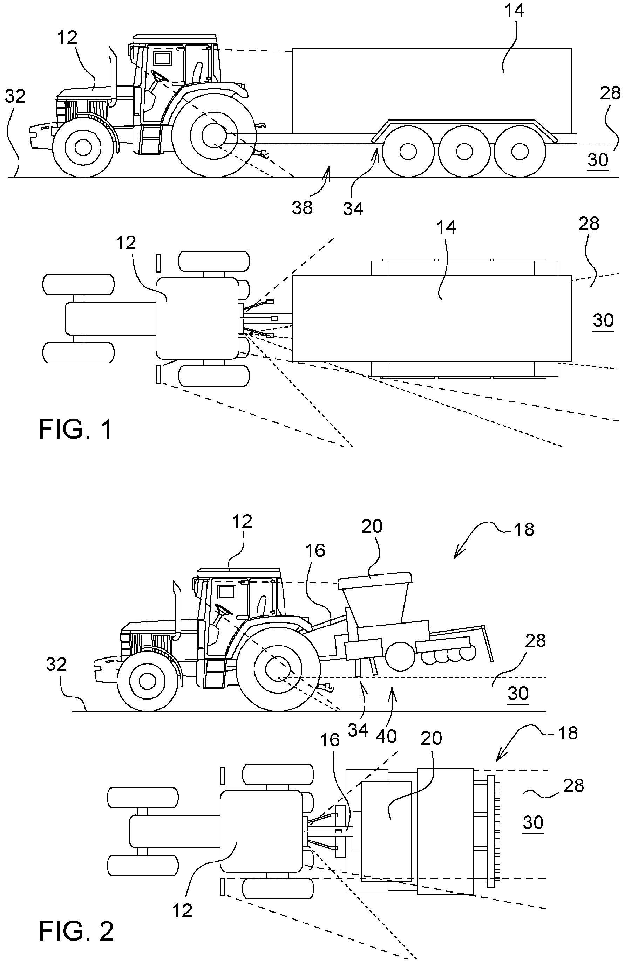

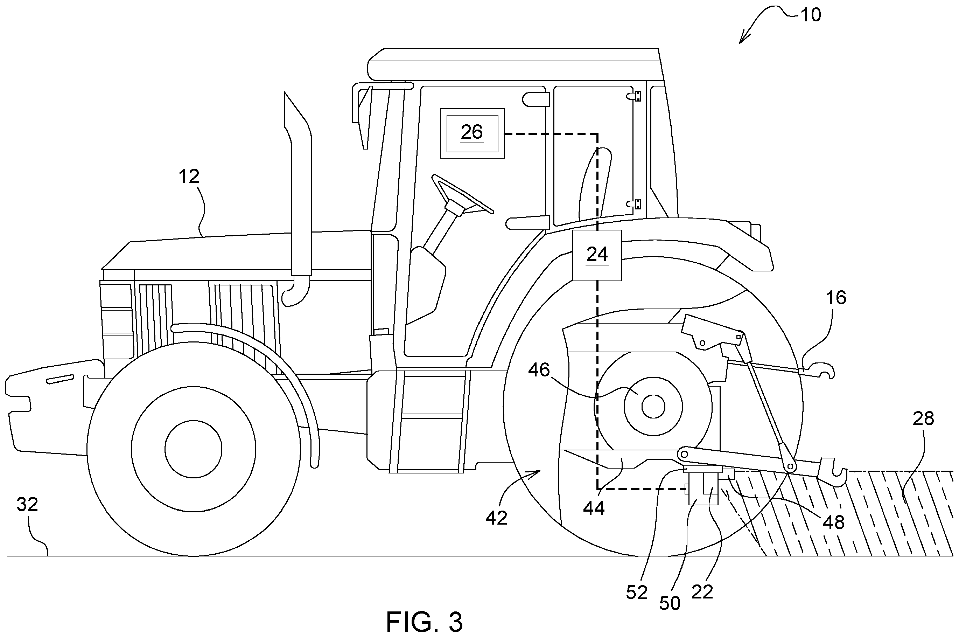

Fig. 1 und 2 zeigen jeweils ein Ausführungsbeispiel eines mit dem erfindungsgemäßen System 10 gemäß Fig. 3 ausgestatteten landwirtschaftlichen Traktors 12 bezüglich unterschiedlicher Anbaugerätesituationen, genauer gesagt eines daran angebrachten Transportanhängers 14 (Fig. 1) bzw. eines an einem Dreipunkt-Kraftheber 16 angebrachten Bearbeitungsgeräts 18 in Gestalt einer Sämaschine 20 (Fig. 2).

Das in Fig. 3 dargestellte System 10 umfasst einen Sensor 22, eine Kontrolleinheit 24 zur Auswertung der Sensordaten sowie eine von der Kontrolleinheit 24 ansteuerbare Bedienerschnittstelle 26 zur Ausgabe von Fahrerhinweisen. Der Sensor 22 weist einen bodennah verlaufenden Erfassungsbereich 28 in Richtung des an dem landwirtschaftlichen Traktor 12 jeweils angebrachten Anbaugeräts 14, 18 auf. Der Sensor 22 ist ausgebildet, ein im Erfassungsbereich 28 liegendes bzw. in diesen eintretendes Fahrzeug 30 (siehe Fig. 1 und 2) zu erkennen sowie ein entsprechendes Hinweissignal zu erzeugen, das der Kontrolleinheit 24 zugeführt wird, die dann nach Maßgabe des Hinweissignals die Bedienerschnittstelle 26 zur Ausgabe eines geeigneten Fahrerhinweises ansteuert.

Der genaue Verlauf des Erfassungsbereichs 28 des Sensors 22 ist in Fig. 1 und 2 beispielhaft veranschaulicht. Zwischen einer Straßenoberfläche 32 und einer dieser zugewandten unteren Kontur 34, 36 des Anbaugeräts 14, 18 ist ein freier Bereich 38, 40 gebildet, der mittels des Sensors 22 vom landwirtschaftlichen Traktor 12 aus einsehbar ist. Die Höhe des freien Bereichs 38, 40 hängt im Falle des gezogenen Anhängers 14 in erster Linie von dessen Reifendurchmesser bzw. im Falle des an dem Dreipunkt-Kraftheber 16 angebrachten Bearbeitungsgeräts 18 von dessen Position in angehobener Transportposition ab. Die Höhe des Freibereichs 38, 40 liegt typischerweise im Bereich von bis zu 0,5 Metern, prinzipiell genügen jedoch bereits einige Zentimeter, um mittels des Sensors 22 ein dem landwirtschaftlichen Traktor 12 nachfolgendes Fahrzeug 30 zu erkennen. Derartige Verhältnisse ergeben sich insbesondere im Falle des an dem landwirtschaftlichen Traktor angebrachten Anhängers 14, nämlich dann, wenn an einer Anhängerunterseite Komponenten in Gestalt eines Drucklufttanks einer Bremsanlage oder dergleichen angebaut sind und so den nutzbaren Erfassungsbereich des Sensors 22 beschränken.

Wie sich den Aufsichtdarstellungen in Fig. 1 und 2 entnehmen lässt, ermöglicht der Sensor 22 die Erfassung eines für den Fahrer (insbesondere über die Seitenspiegel) nicht einsehbaren Straßenbereichs hinter dem Anbaugerät 14, 18.

Bei dem Sensor 22 handelt es sich um einen Radarsensor oder einen bildgebenden Sensor 22 in Gestalt einer Kamera oder dergleichen, dessen Erfassungsbereich 28 rückwärts in Richtung des Anbaugeräts 14, 18 orientiert ist. Der Sensor 22 ist dabei an einer Unterseite 42 einer tragenden Struktur 44 des landwirtschaftlichen Traktors 12 angebracht. Genauer gesagt ist dieser unterhalb der Hinterachse 46 des landwirtschaftlichen Traktors 12 positioniert.

Des Weiteren ist eine Reinigungseinrichtung 48 mit einem Wischer oder einer Hochdruckdüse zur Ausbringung eines Luft- oder Flüssigkeitsstrahls auf eine aktive Fläche des Sensors 22, ein mechanischer Schutz 50 in Gestalt eines den Sensor 22 umgebenden Schilds und eine Halterung 52 zur Anbringung des Sensors 22 an der tragenden Struktur 44 des landwirtschaftlichen Traktors 12 vorhanden.

## Patentansprüche

1. Landwirtschaftlicher Traktor mit einem Anbaugerät und einem System zur Erkennung nachfolgender Verkehrsteilnehmer, umfassend einen Sensor (22) und eine Kontrolleinheit (24), wobei der Sensor (22) einen bodennah verlaufenden Erfassungsbereich (28) in Richtung des an dem landwirtschaftlichen Traktor (12) angebrachten Anbaugeräts (14, 18) aufweist sowie ausgebildet ist, ein im Erfassungsbereich (28) liegendes bzw. in diesen eintretendes Fahrzeug (30) zu erkennen sowie ein entsprechendes Hinweissignal zu erzeugen, das der Kontrolleinheit (24) zugeführt wird, wobei die Kontrolleinheit (22) dazu ausgebildet ist, nach Maßgabe des Hinweissignals eine Bedienerschnittstelle (26) zur Ausgabe eines Fahrerhinweises anzusteuern, wobei mittels des Sensors (22) ein zwischen einer Straßenoberfläche (32) und einer dieser zugewandten unteren Kontur (34) des Anbaugeräts (14, 18) gebildeter freier Bereich (38) vom landwirtschaftlichen Traktor (12) aus einsehbar ist.

2. Landwirtschaftlicher Traktor nach Anspruch 1, **dadurch gekennzeichnet, dass** es sich bei dem Sensor (22) um einen Radarsensor oder einen bildgebenden Sensor handelt.

## Claims

1. Agricultural tractor having an attachment and a system for identifying following road users, comprising a sensor (22) and a control unit (24), wherein the sensor (22) has a detection range (28) which runs in the vicinity of the ground and which is in the direction of the attachment (14, 18) connected to the agricultural tractor (12) and the sensor (22) is configured to identify a vehicle (30) which is located in the detection range (28) and/or which enters therein, and to generate a corresponding message signal which is supplied to the control unit (24), wherein the control unit (22) is configured to activate a user interface (26) in accordance with the message signal for the output of a driver message, wherein a free region (38) which is formed between a road surface (32) and a lower contour (34) of the attachment (14, 18) facing said road surface is visible from the agricultural tractor (12) by means of the sensor (22).

2. Agricultural tractor according to Claim 1, **characterized in that** the sensor (22) is a radar sensor or an image-forming sensor.

## Revendications

1. Tracteur agricole, comprenant un outil rapporté et un système de reconnaissance d'un usager de la route le suivant, comportant un capteur (22) et une unité de contrôle (24), le capteur (22) possédant une zone de détection (28) qui suit un tracé à proximité du sol dans la direction de l'outil rapporté (14, 18) monté sur le tracteur agricole (12) et étant également configuré pour reconnaître un véhicule (30) qui se trouve dans la zone de détection (28) ou qui pénètre dans celle-ci et aussi pour générer un signal de notification correspondant, qui est acheminé à l'unité de contrôle (24), l'unité de contrôle (22) étant configurée pour, d'après l'indication du signal de notification, commander une interface utilisateur (26) en vue de délivrer une notification de conducteur, une zone libre (38), formée entre une surface de la route (32) et un contour inférieur (34) de l'outil rapporté (14, 18) qui fait face à celle-ci, pouvant être vue au moyen du capteur (22) depuis le tracteur agricole (12).

2. Tracteur agricole selon la revendication 1, **caractérisé en ce que** le capteur (22) est un capteur radar ou un capteur à imagerie.
